# EUROPÄISCHE PATENTSCHRIFT

(11) **EP 0 834 233 B1**
(45) Veröffentlichungstag und Bekanntmachung des Hinweises auf die Patenterteilung: **05.01.2000**
(21) Anmeldenummer: 96909068.7
(22) Anmeldetag: 20.04.1996
(51) Int. Cl.: H04N 7/64, H04N 7/54

(54) **VERFAHREN ZUR ERZEUGUNG UND ZUR AUSWERTUNG EINES STROMS VON BILDDATEN FÜR VIDEOÜBERTRAGUNG**
PROCESS FOR PRODUCING AND EVALUATING A VIDEO DATA STREAM FOR VIDEO TRANSMISSION
PROCEDE DE PRODUCTION ET D'EVALUATION D'UN FLUX DE DONNEES D'IMAGE POUR LA TRANSMISSION D'UNE IMAGE

(30) Priorität: 20.06.1995 DE 19521992
(43) Veröffentlichungstag der Anmeldung: 08.04.1998
(73) Patentinhaber: ROBERT BOSCH GMBH, 70442 Stuttgart (DE)
(72) Erfinder: FISCHER, Ralf, D-31199 Diekholzen (DE); NITSCHE, Gunnar, D-31139 Hildesheim (DE)
(86) Internationale Anmeldenummer: DE9600690
(87) Internationale Veröffentlichungsnummer: WO9701247

(56) Entgegenhaltungen:
- EP-A- 0 453 229
- EP-A- 0 512 623
- EP-A- 0 540 350
- EP-A- 0 554 871
- EP-A- 0 609 017
- US-A- 4 972 260
- SIGNAL PROCESSING OF HDTV, III, 4.September 1991, TORINO, IT, Seiten 33-41, XP000379936 KAUFF ET AL.: "A DCT Coding Scheme for Digital HDTV Recording"

## Beschreibung

### Stand der Technik

Das erfindungsgemäße Verfahren geht aus von einem Verfahren nach der Gattung des Hauptanspruchs. Ein solches Verfahren ist bekannt aus EP-A-0453229. Dieses Verfahren dient dazu, Störungen durch Übertragungsfehler möglichst gering zu halten. Zwei Gruppen von Codeworten variabler Länge werden so aufgeteilt, daß die erste Gruppe von der einen Seite her decodierbar ist und die andere Gruppe von der anderen Seite her.

Aus der Veröffentlichung Signal processing of HDTV, III, 4. September 1991, Turin Italien, Seiten 33 bis 41, XP000379/936, Kauff et al: "ADCT Coding Scheme für Digital HDTV Recording" ist es bekannt, zur Erzeugung eines Stromes von Bilddaten gleichartige Bildinformationen in Klassen aufzuteilen und makroblockweise zusammenzufassen. Bilddaten mit fester Wortbreite werden in einer eigenen Klasse makroblockweise aneinandergereiht, ohne daß zwischendrin Bilddaten variabler Wortlänge eingefügt werden. Es wurde bereits ein Videocodierungsstandard von der International Telecommunication Union vorgeschlagen, der für die leitungsgebundene Übertragung von Videobildern mit einer Übertragungsrate von bis zu 64 kBit/s vorgesehen ist. Der Standard hat den Titel "Draft Recommendation H.263" und stammt von der Study Group 15, Working Party 15/1, Document LBC-95, 7. April 1995. In diesem Dokument sind die wesentlichen Informationen zur Quellencodierung der Videosignale, zur Syntax und Semantik bei der Übertragung der Daten, sowie zur Decodierung der Daten im Empfänger enthalten.

Es hat sich aber herausgestellt, daß der Standard für eine Übertragung der Videobilder über fehleranfällige Mobilfunknetze nicht unbedingt geeignet ist, da die Qualität der übertragenen Videobilder aufgrund der vorkommenden Übertragungsfehler nicht ausreichend ist. Zur Lösung dieses Problems werden in der hier vorgestellten Erfindung verschiedene Abwandlungen des bereits bekannten H.263-Standards vorgeschlagen. In der Beschreibung werden häufig Begriffe verwendet, die alle aus dem bekannten Standard H.263 bekannt sind. Es wird diesbezüglich deshalb nochmals ausdrücklich auf das erwähnte Dokument Bezug genommen.

### Vorteile der Erfindung

Das erfindungsgemäße Verfahren mit den kennzeichnenden Merkmalen des Anspruchs 1 hat demgegenüber den Vorteil, daß die Qualität der übertragenen Videobilder, insbesondere bei der Übertragung der Bilddaten über Datenkanäle, in denen vermehrt Übertragungsfehler auftreten können, verbessert ist. Dadurch, daß diejenigen Bilddaten, die eine feste Wortbreite aufweisen in einer besonderen Klasse zusammengefaßt werden und zusammenhängend hintereinander übertragen werden, geht nach einem aufgetretenem Übertragungsfehler nicht sämtliche nachfolgende Information der übertragenen Klasse verloren. Die nachfolgenden Informationsworte können unbeeinflußt korrekt ausgewertet werden. Dies führt zu einer Verbesserung der Bildqualität nach einem aufgetretenen Übertragungsfehler.

Dadurch, daß die codierten Bilddaten der Makroblöcke in den Strom von Bilddaten so eingefügt werden, daß in der Empfängerstation eine Anzahl von codierten Makroblöcken vorwärts decodierbar ist, während eine zweite Anzahl von codierten Makroblöcken rückwärts decodiert ist, ist es möglich, daß nach einem aufgetretenen und erkannten Übertragungsfehler trotzdem noch eine Anzahl von codierten Makroblöcken richtig decodiert werden können. Dies ergibt sich daraus, daß die Makroblöcke in zwei Gruppen eingeteilt sind und daß nach der Übertragung der codierten Daten der Makroblöcke in der Empfängerstation ein sehr breites binäres Wort vorliegt, daß aus den Daten beider Gruppen besteht, jedoch von beiden Seiten her decodiert wird. Tritt bei der Decodierung der einen Gruppe ein Fehler auf, so müssen nur die restlichen Daten der gleichen Gruppe von Makroblöcken verworfen werden. Die andere Gruppe, d. h. die Gruppe von Makroblöcken, die von der anderen Seite her decodiert wird, kann noch korrekt decodiert werden. Im Resultat sind nach einem aufgetretenen Übertragungsfehler wesentlich weniger Bildbereiche gegenüber dem vorhergehenden Videobild nicht aktualisiert, als bei einheitlicher Decodierung des gesamten übertragenen Binärwortes von einer einzigen Seite her.

Wenn die Auswahl der vorwärts zu decodierenden Makroblöcke und die Auswahl der rückwärts zu decodierenden Makroblöcke so getroffen wird, daß benachbarte Makroblöcke jeweils von unterschiedlichen Seiten her decodiert werden, ist eine möglichst gleichmäßige Verteilung der jeweils unterschiedlich zu decodierenden Makroblöcke über das ganze Bild gewährleistet, so daß ein auftretender Fehler in einer der beiden Gruppen von Makroblöcken nicht so leicht im Bild erkennbar ist.

Wenn die gleichartig zu decodierenden Makroblöcke in einer bestimmten Reihenfolge in den Strom von Bilddaten eingefügt werden, so daß jeweils zuerst diejenigen Makroblöcke, die im Zentrum des Bildes positioniert sind, decodiert werden können und zuletzt diejenigen, die in den Randbereichen des Bildes positioniert sind, werden immer die besonders wichtigen Bildteile im Zentrum des Bildes zuerst decodiert.

Wenn dann ein Übertragungsfehler auftritt, gehen dadurch immer nur weniger wichtige Bildinformationen in den Randbereichen verloren.

Durch die in den Unteransprüchen aufgeführten Maßnahmen sind weitere Verbesserungen möglich.

Eine besonders günstige Reihenfolge für die Übertragung der Bilddaten der gleichartig zu decodierenden Makroblöcke ist die in Anspruch 3 angegebene Spiralform.

Weiterhin vorteilhaft ist, daß die Bilddaten, deren Wortlänge von vornherein festgelegt ist, mit einem Paritätsbit versehen werden, so daß eine Fehlererkennung bei der Übertragung dieser Worte leichter möglich wird. Hier sind insbesondere die Bilddaten der Klasse HEADER und ADMIN + DC-INTRA, nämlich die Quantisierungsworte GQUANT und die DC-INTRA-Koeffizienten der diskreten Cosinustransformation wichtig.

Weiterhin vorteilhaft ist, daß bei der Übertragung von codierten Bilddaten, wie den MCBPC-Codes für die Chrominanzinformation im Bild der Klasse ADMIN + DC-INTRA und den MVD-Codes für die Bewegungsvektoren der Klasse MV als kürzester Code eine zweistellige Binärzahl, statt einer einstelligen, wie beim vorgeschlagenen Standard H.263 verwendet wird. Hierdurch wird die Fehlererkennung auch für diese häufig verwendeten Codes erleichtert.

Ein vorteilhaftes Verfahren zur Auswertung eines Stroms von Bilddaten ist in Anspruch 6 angegeben.

### Zeichnungen

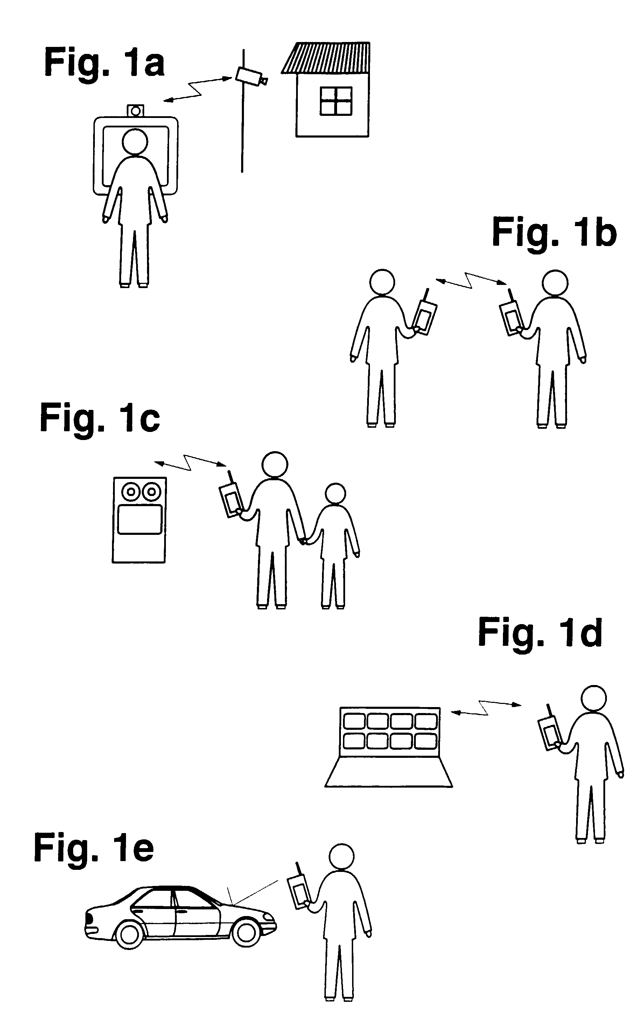

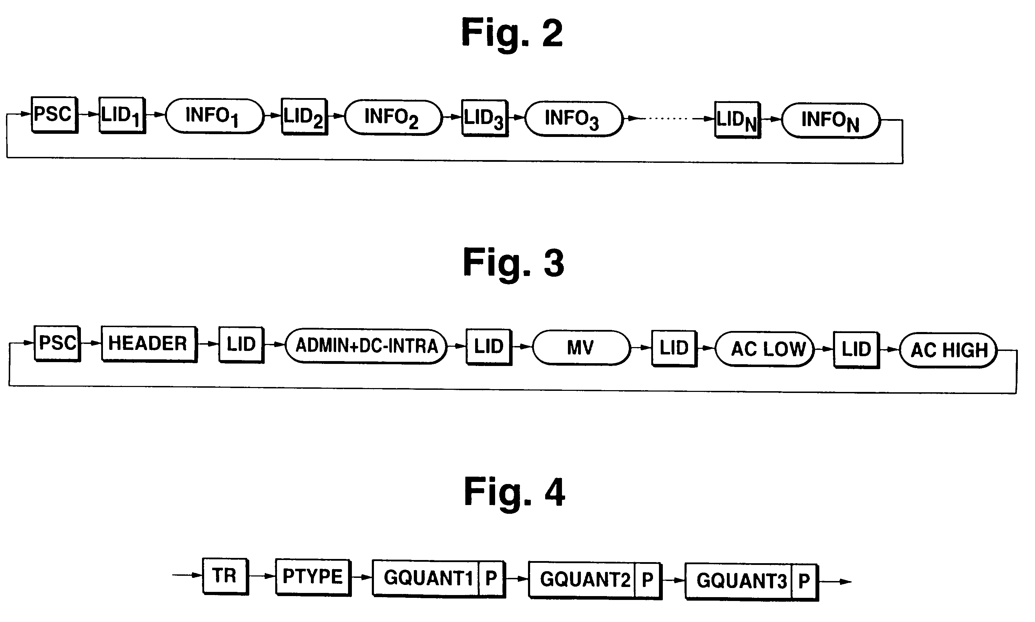

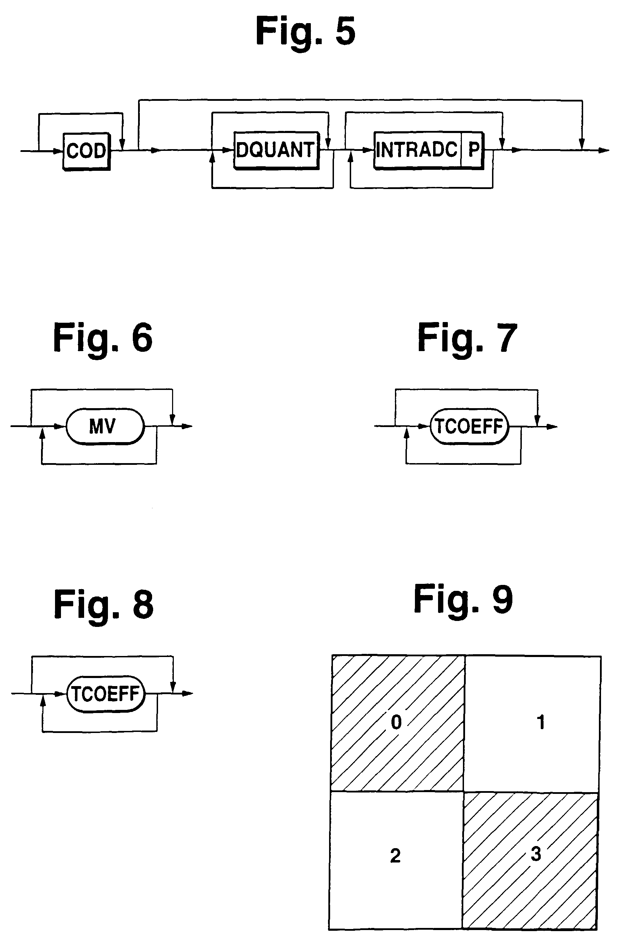

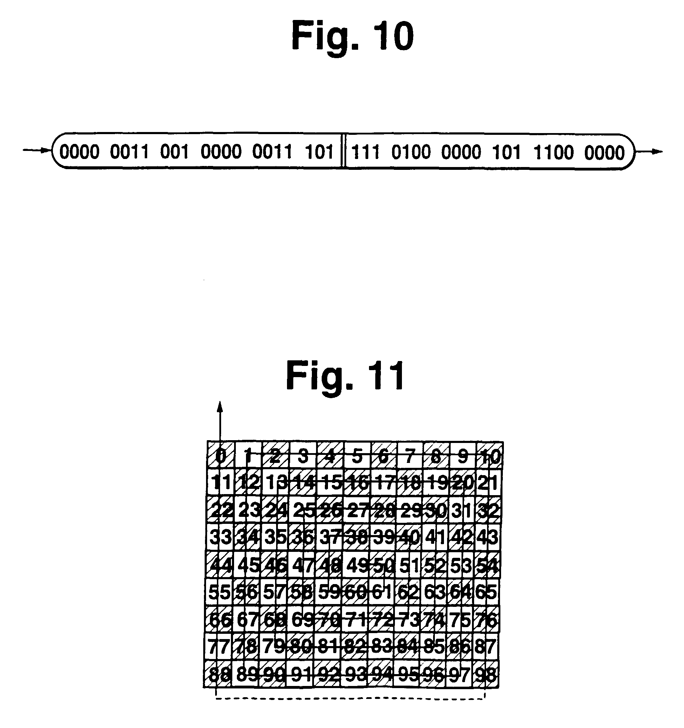

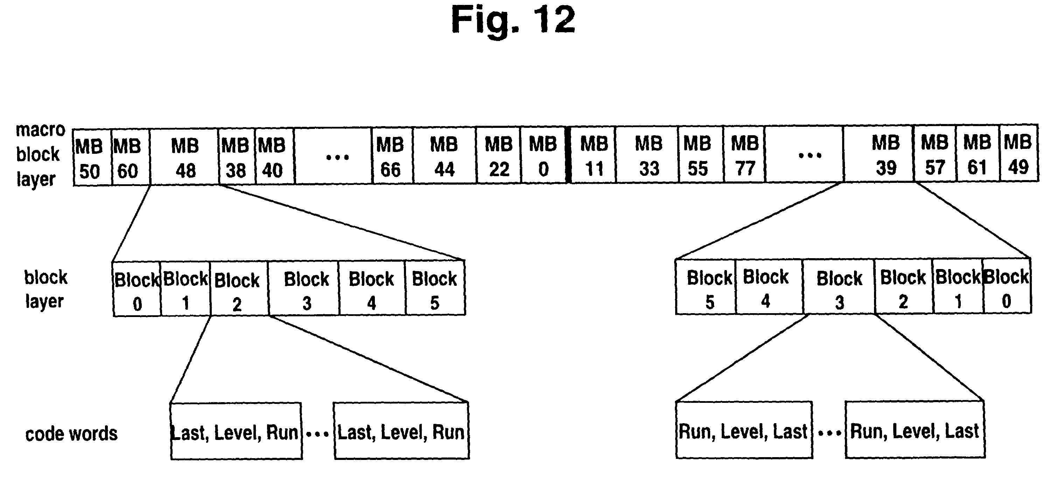

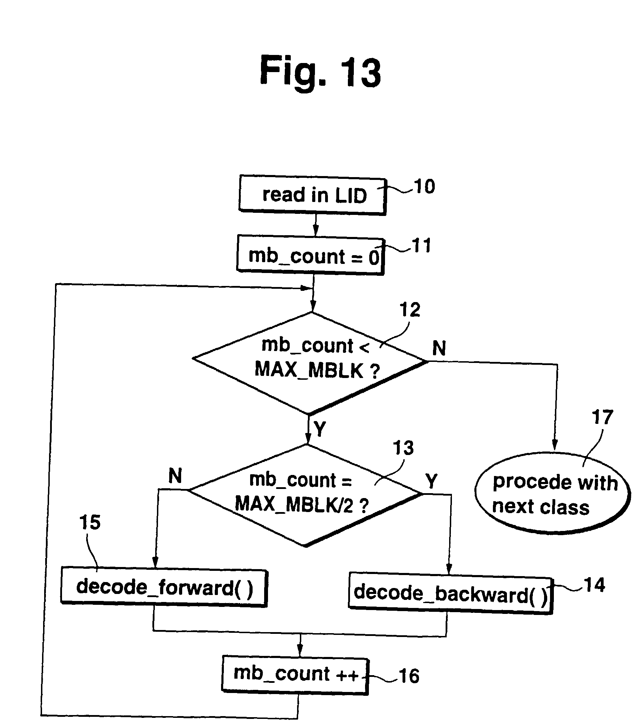

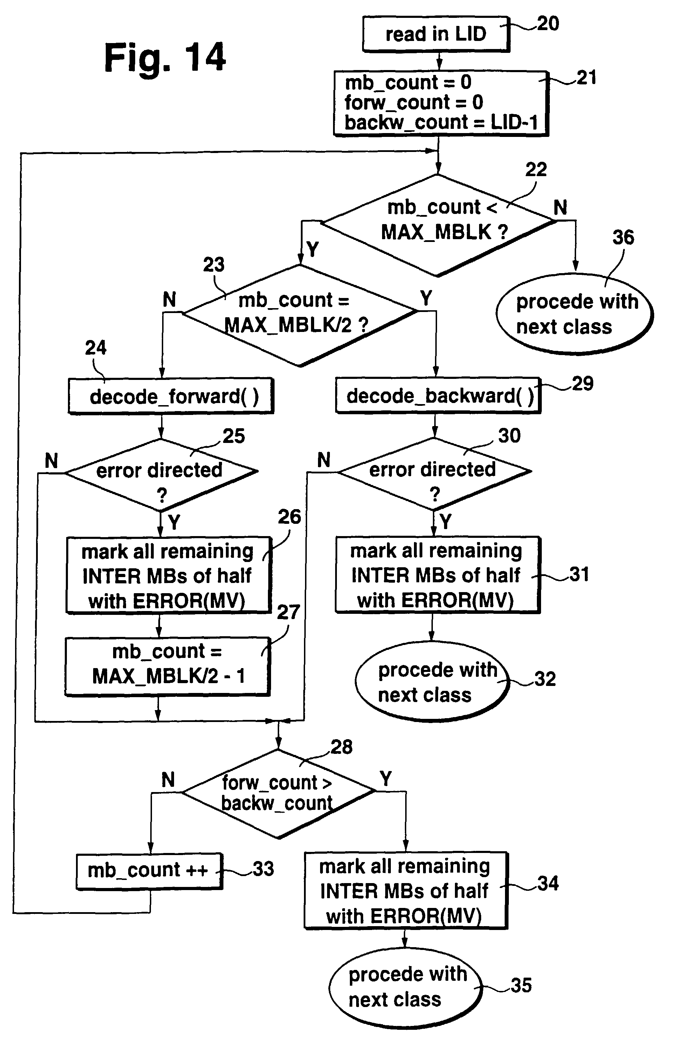

Ein Ausführungsbeispiel der Erfindung ist in den Zeichnungen dargestellt und wird in der nachfolgenden Beschreibung näher erläutert. Es zeigen Figur 1 einige Einsatzgebiete für das erfindungsgemäße Verfahren, wobei Videobilder drahtlos übertragen werden; Figur 2 die allgemeine Klassenstruktur eines codierten Videobildes; Figur 3 eine spezielle Klassenstruktur eines codierten Videobildes für die beschriebene Erfindung; Figur 4 eine spezielle Struktur der Klasse "HEADER" für die beschriebene Erfindung; Figur 5 eine spezielle Struktur der Klasse ADMIN + DC-INTRA für die beschriebene Erfindung; Figur 6 eine Struktur der Klasse MV für die beschriebene Erfindung; Figur 7 eine Struktur der Klasse AC-LOW für die beschriebene Erfindung; Figur 8 eine Struktur der Klasse AC-HIGH für die beschriebene Erfindung; Figur 9 ein sehr vereinfachtes Videobild bestehend aus lediglich vier Makroblöcken; Figur 10 ein Beispiel für einen Bitstrom der Klasse MV für das Bild nach Figur 9 zur Erläuterung des Prinzips der Vorwärts/Rückwärts-Decodierung; Figur 11 ein Bild bestehend aus 99 Makroblöcken mit einer Einteilung der Makroblöcke in vorwärts-/rückwärts zu decodierende Makroblöcke und einer eingezeichneten Spirale; Figur 12 ein Beispiel für einen Bitstrom der Klasse AC-LOW für das Bild nach Figur 11; Figur 13 ein Beispiel für ein Struktogramm für ein Programm zur Decodierung eines Bitstroms einer Klasse für den Fall, daß kein Bitfehler auftritt und Figur 14 ein Beispiel für ein Struktogramm für ein Programm zur Decodierung eines Bitstroms der Klasse MV mit Berücksichtigung von Bitfehlern.

### Beschreibung der Erfindung

Das erfindungsgemäße Verfahren soll bei der Übertragung von Bilddaten eingesetzt werden. Als Übertragungskanal ist dabei insbesondere an einen Mobilfunkkanal gedacht. Bei derartigen Kanälen ist die Übertragungsrate sehr stark begrenzt. Maximal kommt eine Übertragungsrate von 64 kBIT/s in Frage. Die Bildauflösung kann bei solchen Übertragungsraten nicht so groß sein, wie z. B. bei herkömmlichen Fernsehbildern.

Bild 1 zeigt einige Anwendungen derartiger Bildübertragungen. Figur la zeigt z. B. eine Videoüberwachungsanlage, die zur Absicherung von gefährdeten Gebäuden eingesetzt wird. Figur 1b zeigt als Anwendung die Übertragung von Bilddaten zwischen zwei mobilen Bildtelefonen. Figur 1c zeigt die Anwendung der Personenüberprüfung mit Hilfe eines mobilen Bildtelefons. Figur 1d zeigt die Anwendung der Nachrichtenübertragung zu einem mobilen Bildtelefon. Figur le zeigt den Einsatz eines Bildtelefons in einer Kraftfahrzeugwerkstatt zu dem Zweck von Wartungsarbeiten. Hier können von einer zentralen Station Reparaturanleitungen zu einem mobilen Empfangsgerät übermittelt werden. Die beanspruchten Verfahren sind dann jeweils in den Endgeräten (Bildtelefon, Videobildempfänger, Videobildkamera, usw. realisiert).

Im Bild 2 ist eine allgemeine Klassenstruktur für ein codiertes Bild vorgestellt. Mit PSC (Picture Start Code) ist ein Bildanfangscode bezeichnet. Mit LID₁ - LID_{N} sind Längeninformationen für die nachfolgenden Informationen INFO₁ - INFO_{N} bezeichnet. Die rechteckigen Felder in Bild 1 besitzen eine feste definierte Länge, währenddessen die ovalen Teile von Bild 1 eine variable Länge aufweisen.

Erfindungsgemäß wird die in Bild 3 dargestellte Klassenstruktur vorgeschlagen. Mit PSC ist wiederum ein Anfangscodewort eines Bildes bezeichnet. Anschließend werden die Informationen der Klasse HEADER übertragen. Danach folgt eine Längeninformation LID für die nachfolgende ADMIN + DC-INTRA-Klasse. Danach folgen die Daten der ADMIN + DC-INTRA-Klasse. Es folgt dann wieder eine Längeninformation für die nachfolgende MV-Klasse. Die Daten der MV-Klasse werden daraufhin übertragen. Jetzt folgt wieder eine Längeninformation LID für die nachfolgende AC-LOW-Klasse gefolgt von den Daten für die AC-LOW-Klasse. Schließlich folgt eine weitere Längeninformation LID für die nachfolgende AC-HIGH-Klasse. Zum Schluß werden die Daten der AC-HIGH-Klasse übertragen. Danach ist die Übertragung der Bilddaten eines Videobildes beendet und es kann ein neues Videobild übertragen werden.

Nachfolgend werden die einzelnen Klassen und deren Strukturen bei der Datenübertragung genauer erläutert. Eingie Klassen sind bereits aus dem H.263-Standard bekannt. Bild 4 zeigt die Struktur der Klasse HEADER. In dieser Klasse werden Bilddaten übermittelt, die entweder für das gesamte übertragene Bild gültig sind oder aber Informationen enthalten, die für bestimmte Makroblöcke des Bildes gelten. Mit TR (Temporal Reference) ist ein Datenfeld bezeichnet, das einen Code beinhaltet, der darüber Auskunft gibt, wieviel Bilder ausgehend von dem zuletzt übertragenen Bild ggf. nicht übertragen worden sind.

Mit PTYPE (Picture Type) ist eine Information bezeichnet, die für das gesamte Bild Gültigkeit hat. Das Bitfeld hat im H.263-Standard eine Länge von 11 Bits. Die Bedeutung der einzelnen Bits dieses Codes kann dem H.263-Standard entnommen werden. Mit GQUANT1 - GQUANT5 sind Quantisierungsinformationen bezeichnet, die angeben, mit welcher Quantisierung bestimmte Bildteile quantisiert worden sind. In Bild 4 sind beispielsweise fünf Quantisierwerte GQUANT1 - GQUANT3 angegeben. Die Übertragung mehrerer Quantisierwerte pro Bild hat den Vorteil, daß wenn bei der Übertragung der Quantisierungsinformation GQUANT1 z. B. ein Übertragungsfehler auftritt, nicht automatisch sämtliche Bildteile falsch quantisiert werden, da nachfolgend noch die Quantisierungsinformation GQUANT2 - GQUANT5 übermittelt werden und insofern, wenn hier kein Fehler auftritt, eine ordnungsgemäße Quantisierung der entsprechenden Bilddaten stattfinden kann.

In Bild 5 ist die erfindungsgemäße Klasse ADMIN + DC-INTRA dargestellt. In dieser Klasse werden die Bildinformationen DQUANT und INTRADC übertragen. Die Information DQUANT gibt an, ob der entsprechende Makroblock mit einem anderen Quantisierwert quantisiert wurde als der entsprechende GQUANT-Wert, der zuvor übertragen wurde. Die INTRADC-Werte entstehen neben den AC-Koeffizienten bei der diskreten Kosinustransformation für den entsprechenden Makroblock. Sowohl die DQUANT-Werte als auch die INTRADC-Werte haben eine feste Wortlänge. Erfindungsgemäß werden sämtliche DQUANT und INTRADC-Werte aller Makroblöcke hintereinander übertragen. Eine Vermischung von Informationen mit variabler Länge mit Informationen mit fester Länge ist dann nicht mehr gegeben und ein auftretender Fehler in einer Information mit variabler Länge führt nicht mehr unbedingt zum Verlust von Informationen mit fester Länge. COD (Coded Macroblock Indication) bezeichnet ein Bitfeld, das angibt, ob der nachfolgende Makroblock überhaupt codiert übertragen wurde, oder ob nicht viel mehr die Daten dieses Makroblocks vom vorhergehenden Bild übernommen werden sollen.

Bekanntlich werden Makroblöcke entweder Inter oder Intra codiert. Eine Inter-Codierung bedeutet, daß für diesen Makroblock eine Bewegungsschätzung vorliegt und Bewegungsvektoren MV übertragen werden. INTRA bedeutet, daß für den entsprechenden Makroblock keine Bewegungsschätzung vorgenommen wurde und statt dessen DQUANT- und INTRADC-Werte bzw. AC-Koeffizienten übertragen werden. Die genannten unterschiedlichen Informationen sind aus dem H.263-Standard bekannt. Auch die Funktionsweise der diskreten Kosinustransformation sowie der Quantisierung ist aus dem Stand der Technik hinlänglich bekannt. Diesbezüglich wird auch auf den Artikel "Bildverarbeitung und Bildkompression für die digitale HDTV-Magnetbandaufzeichnung und für den digitalen TV/HDTV Rundfunk" in dem Buch "Kommunikationstechnik, Trends und Entwicklungen", Herausgeber Karl Dietrich Abel, Seiten 69ff., VISTAS-Verlag 1994 verwiesen.

Vor der Übertragung der DQUANT- und INTRADC-Werte werden die Administrationsinformationen MCBPC und CBPY übertragen. Mit MCBPC (Macro Block Type & Coded Block Pattern) ist ein Code bezeichnet, der angibt, welche der Blöcke eines Makroblockes DQUANT-Werte bzw. INTRADC-Werte enthalten. Bezüglich dessen Bedeutung wird auch auf den H.263-Standard verwiesen. Die Information CBPY (Coded Block Pattern for Chrominance) gibt an, ob bestimmte DCT-Koeffizienten für die Y-Blöcke eines Makroblocks folgen. Auch diesbezüglich wird auf den H.263-Standard verwiesen.

Bei der Übertragung der MCBPC-Codes wird nicht der in dem H.263-Standard vorgeschlagene Code "1" verwendet, sondern statt dessen der Code "10". Dadurch wird erreicht, daß beim Auftreten eines Bitfehlers, bei dem eine 0 fehlerhaft durch eine 1 übertragen wird, nicht so leicht ein gültiger Code erkannt werden kann. Es müßten dann schon zwei Bitfehler nacheinander auftreten, damit ein gültiger "10"-Code entsteht, der nicht als Fehler erkannt werden würde.

Bild 6 zeigt die Klasse MV (Motion Vector). In dieser Klasse werden erfindungsgemäß zusammengefaßt alle Bewegungsvektoren aller Makroblöcke absolut übertragen. Es findet keine Vektorprediktion nach dem H.263-Standard statt. Dadurch wird einer Fehlerfortpflanzung entgegengewirkt. Bei der Übertragung der Bewegungsvektoren wird ebenfalls nicht der in dem Standard H.263 vorgeschlagene binäre Code "1" verwendet, sondern statt dessen der Code "10".

Bild 7 zeigt die Klasse AC-LOW. Hier werden hintereinander die AC-Koeffizienten der diskreten Kosinustransformation für die Inter-codierten Makroblöcke übertragen. Dabei werden hier allerdings nur die AC-Koeffizienten für die niederen Frequenzen im Bild übertragen. Diese Koeffizienten weisen ebenfalls wie die Codewörter für die Bewegungsvektoren (MV) eine variable Länge auf. Eine beispielhafte Tabelle von solchen Codewörtern ist im H.263-Standard vorhanden. Bild 8 zeigt dann schließlich die Klasse AC-HIGH. Dort werden die entsprechenden AC-Koeffizienten der diskreten Kosinustransformation für die einzelnen Blöcke des entsprechenden Makroblocks hintereinander übertragen. Diese AC-Koeffizienten entsprechen den höheren Frequenzen des übertragenen Bildes. Sie sind jedoch für die Bildqualität weniger wichtig als die AC-LOW-Koeffizienten. Natürlich könnte auch eine weitere Klasse hier noch hinzugefügt werden, die z. B. die Koeffizienten für die mittleren Frequenzen im Bild beinhaltet.

Figur 9 zeigt ein sehr vereinfachtes Videobild mit nur lediglich vier Makroblöcken. Die Makroblöcke sind von 0 - 3 numeriert. Die schraffierten Makroblöcke 0 und 3 werden in der Empfängerstation vorwärts decodiert. Dagegen werden die Makroblöcke 1 und 2 rückwärts decodiert. Zur Erläuterung der Vorwärts- und Rückwärtsdecodierung wird auf Figur 10 verwiesen. Dort ist der Bitstrom dargestellt, der bei der Übertragung der Klasse MV für die Makroblöcke des Bildes in Figur 9 entsteht. Für den Makroblock 0 wird dabei als Bewegungsvektor der Vektor mit den Koordinaten (-8; 24) übertragen. Dem entspricht nach der Tabelle 8 in dem H.263-Standard der binäre Code 0000 0011 001. Für den Makroblock 1 wird der Bewegungsvektor mit den Koordinaten (-7; 25) übertragen. Diesem Bewegungsvektor entspricht der binäre Code 0000 0011 101. Für den Makroblock 2 wird der Bewegungsvektor mit den Koordinaten (-8; 23, 5) übertragen. Dieser Vektor entspricht nach der genannten Tabelle der Code 0000 0010 111. Für den Makroblock mit der Nummer 3 wird der Bewegungsvektor (-7; 25) übertragen. Diesem entspricht der Code 0000 0011 101. Die Codes für den Makroblock 0 und den Makroblock 3 werden vorwärts decodiert übertragen. Dadurch ergibt sich der Bitstrom im linken Teil der Figur 10. Zuerst wird dabei das Codewort für den Makroblock 0 und direkt anschließend das Codewort für den Makroblock 3 übertragen. Die Codewörter für die Makroblöcke 1 und 2 werden rückwärts decodiert übertragen. D. h., daß die Codewörter für die entsprechenden Makroblöcke von rechts nach links gelesen übertragen werden. Zuerst wird dabei das Codewort für den Makroblock 2 und anschließend das Codewort für den Makroblock 1 übertragen. Es ergibt sich der Bitstrom gemäß dem rechten Teil von Figur 10.

In Figur 11 ist die Einteilung eines Videobildes in 99 Makroblöcke dargestellt. Die Makroblöcke sind von 0 - 98 durchnumeriert. Dies entspricht auch der Einteilung eines Videobildes in Makroblöcke gemäß dem Standard H.263. Erfindungsgemäß wird eine Hälfte der Makroblöcke des Bildes vorwärts decodiert und die andere Hälfte der Makroblöcke rückwärts decodiert. Die schattiert dargestellten Makroblöcke werden vorwärts decodiert und die unschattiert dargestellten Makroblöcke werden rückwärts decodiert. Natürlich ist im Rahmen der Erfindung auch eine andere Einteilung der Makroblöcke in vorwärts und rückwärts zu decodierende Makroblöcke möglich. Die Einteilung ist im Ausführungsbeispiel der Figur 11 so gewählt, daß jeweils benachbarte Makroblöcke unterschiedlich zu decodieren sind. Es ergibt sich ein schachbrettartiges Muster. Zusätzlich ist in Figur 11 noch eine Spirale eingezeichnet. Diese Spirale legt fest, in welcher Reihenfolge die Bildinformationen der einzelnen Makroblöcke hintereinander übertragen werden. Dieser Vorgang wird nachfolgend anhand der Figur 12 erläutert. In Figur 12 ist die Übertragung der Bildinformation für die Klasse AC-LOW oder AC-HIGH dargestellt. In der Makroblockebene betrachtet, werden sämtliche AC-Koeffizienten für die Makroblöcke des Bildes nacheinander übertragen. Im Bild ist dabei angegeben, in welcher Reihenfolge die Informationen für die Makroblöcke übertragen werden. Im ersten Teil von Figur 12 werden die vorwärts zu decodierenden Makroblöcke hintereinander übertragen. Durch die Spirale der Figur 11 ist vorgegeben, welche vorwärts zu decodierenden Makroblöcke zuerst übertragen werden. Zuallererst wird der Makroblock mit der Nummer 50 übertragen. Anschließend schließt sich der Makroblock mit der Nummer 60 an, danach der Makroblock mit der Nummer 48, usw. Zuletzt werden die Makroblöcke mit den Nummern 44, 22 und 0 übertragen. Diese Reihenfolge ist deshalb gewählt, weil im allgemeinen bei einem Videobild die Bildteile im Zentrum des Videobildes die größte Bedeutung haben. Wenn z. B. bei einem Bildtelefon der Sprecher im Bild erscheint, so werden Kopf und Schulter des Sprechers vorwiegend im Zentrum des Bildes erscheinen. Tritt jetzt im Verlauf der Übertragung ein Übertragungsfehler auf, der auch von dem Decoder in der Empfängerstation erkannt wird, so müssen die nachfolgenden Informationen für die darauffolgenden Makroblöcke als fehlerhaft gekennzeichnet werden, da ja die übertragenen Codewörter unterschiedliche Länge aufweisen und deshalb nach einem aufgetretenen Fehler nicht mehr richtig ausgewertet werden können. Durch die festgelegte Reihenfolge ist jedoch sichergestellt, daß immer die wichtigsten Bildteile zuerst decodiert werden und nach einem aufgetretenen Fehler nicht als fehlerhaft deklariert werden. Im zweiten Teil von Figur 12 ist die Reihenfolge derjenigen Makroblöcke angegeben, die rückwärts zu decodieren sind. Es werden zeitlich gesehen die Makroblöcke aus den Randbereichen zuerst übertragen und dann zum Schluß die wichtigsten Makroblöcke im Zentrum. Nachdem alle Daten der ganzen Makroblöcke empfangen worden sind, kann dann die Decodierung dieser rückwärts zu decodierenden Makroblöcke von rechts nach links stattfinden. Dann ist gewährleistet, daß zuerst die wichtigsten Makroblöcke 49, 61, 59, usw. decodiert werden, hingegen am Schluß die weniger wichtigen Makroblöcke 55, 33, 11.

Der vorwärts zu decodierende Block 48 ist in Figur 12 feiner unterteilt dargestellt in die Blöcke mit den Nummern 0 - 5. Bekanntlich sind ja die einzelnen Makroblöcke nach dem Standard H.263 in sechs weitere Blöcke unterteilt. Dabei enthalten die Blöcke 0 - 3 die Luminanzinformationen und die Blöcke 4 und 5 die Chrominanzinformationen. In jedem der Blöcke 0 - 5 werden die entsprechenden Codewörter für die AC-Koeffizienten übertragen.

Gemäß des zweiten Teils von Figur 12 ist für den Makroblock 37 die Reihenfolge der Übertragung der Codewörter von rechts nach links zu lesen, so daß wiederum zuerst die Codewörter für den Block 0 und zuletzt die Codewörter für den Block 5 decodiert werden können. Die Codewörter sind entsprechend gespiegelt, wie in Figur 10 angegeben.

Figur 13 zeigt ein allgemeines Struktogramm für ein Programm, das die Decodierung der übertragenen Bildinformation innerhalb einer Klasse steuert. Mit der Bezugszahl 10 ist ein Programmschritt bezeichnet, in dem die Längeninformation LID vor der Übertragung einer Klasse eingelesen wird. Im Programmschritt 11 wird dann ein Makroblockzähler auf den Wert 0 gesetzt. In Abfrage 12 wird überprüft, ob der Makroblockzähler kleiner als die maximale Anzahl der Makroblöcke eines Bildes ist. Wenn dies der Fall ist, wird nachfolgend in Abfrage 13 überprüft, ob der Makroblockzähler den Wert der halben Anzahl der maximalen Makroblöcke bereits erreicht hat. Ist dies der Fall, werden die nachfolgenden Makroblöcke im Schritt 14 rückwärts decodiert. Ist dies noch nicht der Fall, so werden die nachfolgenden Makroblöcke noch vorwärts decodiert. Dies geschieht dann im Programmschritt 15. Anschließend wird der Makroblockzähler inkrementiert. Dies geschieht im Programmschritt 16. Danach wird zu Abfrage 12 wiederholt übergegangen. Wird in Abfrage 12 schließlich erkannt, daß der Makroblockzähler den Wert der maximalen Anzahl von Makroblöcken erreicht hat, wird mit der Decodierung der Bilddaten der nächsten Klasse fortgeführt. Dies geschieht dann im Programmschritt 17. Das vorgestellte Struktogramm von Figur 13 ist für den Fall vorgesehen, daß keine Übertragungsfehler während der Decodierung auftreten. Das Programm wird von einem geeigneten Mikroprozessor abgearbeitet.

In Figur 14 ist jetzt ein weiteres Struktogramm dargestellt, das auch Fehlerbehandlungsmaßnahmen enthält, wenn ein Übertragungsfehler erkannt wurde. Mit der Bezugszahl 20 ist wieder ein Programmschritt bezeichnet, in dem Längeninformationen für die übertragede Klasse eingelesen und ausgewertet werden. Im Programmschritt 21 wird ein Makroblockzähler mb_count auf den Wert 0 gesetzt. Weiterhin wird ein Vorwärtszähler forw_count auf den Wert 0 gesetzt und ein Rückwärtszähler backw_count auf den in dem LID-Feld ausgelesenen Wert LID-1. Es folgt dann in Abfrage 22 wiederum eine Abfrage, ob der Makroblockzähler den maximalen Wert der Makroblöcke bereits erreicht hat. Zu diesem Zeitpunkt wird dies noch nicht der Fall sein. Es findet dann in der nachfolgenden Abfrage 23 die Abfrage statt, ob der Makroblockzähler dem halben Wert der maximalen Anzahl von Makroblöcken bereits entspricht. Ist dies noch nicht der Fall, so wird im Programmschritt 24 der nächste Makroblock vorwärts decodiert. Anschließend wird in Abfrage 25 abgefragt, ob ein Fehler erkannt worden ist. Wenn dies der Fall ist, werden im nachfolgenden Programmschritt 26 alle noch vorwärts zu decodierenden Makroblöcke als fehlerhaft markiert. Dies ist möglich, weil der Makroblockzähler immer angibt, wieviel Makroblöcke bereits decodiert wurden und von vornherein in der Längeninformation entnehmbar ist, wieviel Makroblöcke insgesamt vorwärts zu decodieren sind. Im Programmschritt 27 wird dann der Makroblockzähler auf den halben Wert der maximalen Anzahl von Makroblöcken -1 gesetzt. Wurde in Abfrage 25 kein Fehler erkannt, so werden die Programmschritte 26 und 27 übergegangen.

Wurde in Abfrage 23 festgestellt, daß der Makroblockzähler den halben Wert der maximalen Anzahl von Makroblöcken bereits erreicht, so werden die nachfolgenden Makroblöcke rückwärts decodiert. Dies geschieht im Programmschritt 29. In Abfrage 30 wird dann erneut abgefragt, ob ein Fehler erkannt worden ist. Wenn dies der Fall ist, werden im Programmschritt 31 alle noch nicht decodierten Makroblöcke der Gruppe mit den rückwärts zu decodierenden Makroblöcken als fehlerhaft gekennzeichnet. Anschließend wird im Programmschritt 32 mit der Decodierung der Informationen der nächsten Klasse begonnen. Wurde in Abfrage 30 kein Fehler erkannt, folgt nachfolgend die Abfrage 28. In dieser Abfrage wird überprüft, ob der Vorwärtszähler mittlerweile einen Zählerstand erreicht hat, der größer ist, als der Zählerstand des Rückwärtszählers. Natürlich setzt dies voraus, daß der Vorwärtszähler im Programmschritt 24 nach der Decodierung eines Makroblocks jeweils inkrementiert wird und der Rückwärtszählers 29 nach der Decodierung eines rückwärts zu decodierenden Makroblockes dekrementiert wird. Wenn die Bedingung in Abfrage 28 erfüllt ist, wird im nachfolgenden Programmschritt 31 der Makroblockzähler inkrementiert und es kann anschließend mit Abfrage 22 fortgeführt werden. Wurde statt dessen in Abfrage 28 erkannt, daß der Vorwärtszähler einen kleineren Zählerstand als der Rückwärtszähler aufweist, so muß in jedem Fall ein Fehler vorliegen, der nicht erkannt worden ist, und es werden alle verbleibenden Makroblöcke, die rückwärts zu decodieren sind, als fehlerhaft markiert. Es wird dann mit der Decodierung der Informationen der nächsten Klasse im Programmschritt 35 fortgefahren. Auch wenn in Abfrage 22 erkannt wird, daß der Makroblockzähler einen größeren Zählerstand aufweist, als die maximal mögliche Anzahl von Makroblöcken, wird mit der Decodierung der Informationen der nächsten Klasse fortgefahren. Dies geschieht im Programmschritt 36.

Das prinzipielle Decodierschema ist demnach durch folgende drei Stufen gekennzeichnet:
1. Die Klasseninformation entsprechend der Angabe in dem LID-Feld einlesen und auswerten;
2. Vorwärtsdecodierung bis die Hälfte der Makroblöcke decodiert ist;
3. Rückwärtsdecodierung der zweiten Hälfte.

Ausnahmen bilden die erste Klasse (HEADER), deren Länge konstant sein kann, so daß keine Längeninformation LID mitübertragen werden muß, sowie die letzte Klasse. Die Längeninformation der letzten Klasse kann ebenfalls entfallen, da immer bis zum nächsten Bildanfangscode decodiert werden kann.

Durch Bitfehler auf dem Übertragungskanal kann es zu verschiedensten Symbolfehlern kommen. Allen Klassen gemeinsam ist z. B. eine Verschiebung der Grenze zwischen Vorwärts- und Rückwärtsdecodierung durch Fehler und dadurch eine Decodierung über diese Grenze hinaus bzw. eine zu kurze Decodierung einer Hälfte. Ein solcher Fehler kann durch den Einsatz der erwähnten Vorwärts-/Rückwärtszähler erkannt werden. Am Anfang wird der Vorwärtszähler zu 0 und der Rückwärtszähler zu der maximalen Bitanzahl in dieser Klasse -1 gesetzt (LID-1). Überschneiden sich die beiden Zähler nach der Decodierung beider Hälften, liegt ein Fehler vor und die weitere Decodierung wird abgebrochen. Zudem kann rückwirkend eine bestimmte Zahl der letzten decodierten Symbole beider Hälften ignoriert werden.

Wird ein Fehler innerhalb der Vorwärtshälfte erkannt, werden von der aktuellen Position an bis zum Ende der Hälfte alle Makroblöcke bzw. Symbole der Makroblöcke als fehlerhaft gekennzeichnet, ebenso kann rückwirkend eine bestimmte Zahl bereits decodierter Makroblöcke/Symbole verworfen werden. Danach erfolgt eine Umschaltung in die Decodierung der Rückwärtshälfte. Bei einem Fehler in der Rückwärtshälfte wird nach einer Kennzeichnung der verbleibenden Makroblöcke/Symbole die Decodierung der Klasse abgebrochen.

Alle als fehlerhaft gekennzeichneten Makroblöcke werden in der Empfängerstation durch die entsprechenden Makroblöcke des vorhergehenden Bildes ersetzt. Sind nur Teilinhalte eines Makroblockes als fehlerhaft erkannt worden, so ist klassenabhängig folgendes Vorgehen möglich. Diesbezüglich wird auf die nachfolgende Tabelle verwiesen.

| Klasse | Fehler in Symbol | Fehlerbehandlung |
|---|---|---|
| HEADER | PQUANT+P | Verwende letzten Quantisierer des vorhergehenden Bildes |
| | GQUANT+P | Verwende differentiellen Quantisierer DQUANT |
| ADMIN + DC-INTRA | MCBPC | setze alle folgenden Makroblöcke der Hälfte zu "Not Coded", falls *vorwärts* schalte nach *rückwärts* |
| | DC-INTRA+P | setze aktuellen Makroblock nach kompletter Dekodierung des Bildes zu "Not Coded" (optional kann nur der betroffene Block zu "Not Coded" gesetzt werden) |
| | CBPY | setze alle folgenden Makroblöcke der Hälfte zu "Not Coded", falls *vorwärts* schalte nach *rückwärts* |
| MV | MV | setzte alle folgenden INTER-Makroblöcke der Hälfte nach kompletter Dekodierung des Bildes zu "Not Coded", falls *vorwärts* schalte nach *rückwärts* |
| AC LOW | TCOEFF | setzte die AC-Koeffizienten aller folgenden Makroblöcke der Hälfte nach kompletter Dekodierung des Bildes zu Null, falls *vorwärts* schalte nach *rückwärts* |
| AC HIGH | TCOEFF | falls *vorwärts* schalte nach *rückwärts* |

Das erfindungsgemäße Verfahren ist nicht auf die hier beschriebene Ausführungsform beschränkt. Es muß z. B. nicht unbedingt die Hälfte der Makroblöcke vorwärts decodiert werden und die andere Hälfte der Makroblöcke rückwärts decodiert werden. Es kann auch z. B. eine Einteilung zwei Drittel vorwärts decodiert und ein Drittel rückwärts decodiert oder Ähnliches gewählt werde. Statt fünf globale Quantisierwerte für ein Bild zu übertragen, ist es ebenfalls möglich eine andere Anzahl zu verwenden, z. B. 3 oder auch noch mehr als 5 Quantisierungswerte.

## Patentansprüche

1. Verfahren zur Erzeugung eines Stroms von Bilddaten, die über einen Datenkanal, insbesondere Mobilfunkkanal, übertragbar sind, wobei ein Bild in eine Anzahl von Makroblöcken eingeteilt ist und die Bildinformationen in Klassen gleichartiger Informationen eingeteilt sind, wobei die Bilddaten mindestens eines Teils der Klassen makroblockweise codiert werden und die codierten Bilddaten so in den Strom von Bilddaten für die jeweilige Klasse eingefügt werden, daß in einer Empfängerstation eine erste Anzahl der codierten Makroblöcke von der Seite der zuerst übertragenen Bits der Bilddaten dieser Klasse her decodierbar sind und wobei eine zweite Anzahl der codierten Makroblöcke von der Seite der zuletzt übertragenen Bits der Bilddaten der Klasse her decodierbar sind, dadurch gekennzeichnet, daß die gleichartig zu decodierenden Makroblöcke in einer solchen Reihenfolge in den Strom von Bilddaten eingefügt werden, daß jeweils zuerst diejenigen Makroblöcke, die im Zentrum des Bildes positioniert sind, decodierbar sind und zuletzt die Makroblöcke, die in den Randbereichen des Bildes positioniert sind, decodierbar sind, daß die Auswahl der Makroblöcke, die von der Seite der zuerst übertragenen Bits der Bilddaten her decodierbar sind und derjenigen Makroblöcke, die von der Seite der zuletzt übertragenen Bits der Bilddaten her decodierbar sind, so getroffen wird, daß benachbarte Makroblöcke jeweils von unterschiedlichen Seiten her decodiert sind und daß diejenigen Bilddaten, die alle eine feste Wortbreite aufweisen in einer eigenen Klasse zusammengefaßt und für alle Makroblöcke hintereinandergereiht werden, ohne daß zwischendrin Bilddaten mit variabler Wortbreite eingefügt werden.

2. Verfahren nach Anspruch 1, dadurch gekennzeichnet, daß in den Strom von Bilddaten als Bildinformation eines Bildes eine globale Quantisierungsinformation (GQUANT) mehr als einmal, insbesondere für verschiedene Bereiche des Bildes, eingefügt wird.

3. Verfahren nach Anspruch 1, dadurch gekennzeichnet, daß die Reihenfolge der Einfügung der Bilddaten der gleichartig zu decodierenden Makroblöcke in den Strom von Bilddaten durch eine Spirale vorgegeben ist, die im Zentrum des Bildes beginnt und von dort ausgehend sich über alle Bereiche des Bildes erstreckt, wobei die Randbereiche des Bildes zuletzt erfaßt werden.

4. Verfahren nach einem der vorhergehenden Ansprüche, dadurch gekennzeichnet, daß zur Erleichterung der Fehlererkennung bei der Übertragung von Bilddaten mit fester Wortbreite, die in der eigenen Klasse (ADMIN + DC-INTRA) zusammengefaßt sind, jeweils ein Paritätsbit pro Datenwort (INTRADC, DQUANT) hinzugefügt wird.

5. Verfahren nach einem der vorhergehenden Ansprüche, dadurch gekennzeichnet, daß bei der Codierung von Bilddaten, insbesondere den Bilddaten mit variabler Wortbreite, wie den MCBPC-Codes und/oder den MVD-Codes, als kürzester Code eine zweistellige Binärzahl, insbesondere (10) verwendet wird.

6. Verfahren zur Auswertung eines nach einem der Ansprüche 1 bis 5 erzeugten Stroms von Bilddaten, wobei die Bildinformationen eines Bildes in Klassen gleichartiger Informationen eingeteilt sind und das Bild in Makroblöcke eingeteilt ist, wobei die Bilddaten mindestens eines Teils der Klassen makroblockweise codiert sind, dadurch gekennzeichnet, daß eine erste Anzahl der codierten Makroblöcke von der Seite der zuerst übertragenen Bits der Bilddaten dieser Klasse her decodiert wird und daß eine zweite Anzahl der codierten Makroblöcke von der Seite der zuletzt übertragenen Bits der Bilddaten der Klasse her decodiert wird und daß diejenigen Makroblöcke, die von der gleichen Seite her decodiert werden, in einer solchen Reihenfolge decodiert werden, daß jeweils zuerst diejenigen Makroblöcke, die im Zentrum des Bildes positioniert sind, decodiert werden und zuletzt die Makroblöcke, die in den Randbereichen des Bildes positioniert sind, decodiert werden.

## Claims

1. Process for producing a stream of video data which can be transmitted via a data channel, in particular mobile radio channel, a picture being divided into a number of macroblocks and the picture information items being divided into classes of identical information items, the video data of at least some of the classes being coded in a macroblock-by-macroblock manner and the coded video data being inserted into the stream of video data for the respective class in such a way that, in a receiver station, a first number of coded macroblocks can be decoded from the side of the bits of the video data of this class that were transmitted first, and it being possible for a second number of coded macroblocks to be decoded from the side of the bits of the video data of the class that were transmitted last, characterized in that the macroblocks that are to be decoded identically are inserted into the video data stream in an order such that in each case those macroblocks which are positioned in the centre of the picture can be decoded first and the macroblocks which are positioned in the edge regions of the picture can be decoded last, in that the selection of the macroblocks which can be decoded from the side of the bits of the video data that were transmitted first and of those macroblocks which can be decoded from the side of the bits of the video data that were transmitted last is effected such that neighbouring macroblocks are in each case decoded from different sides, and in that those video data which all have a fixed word width are combined in a separate class and are strung together for all macroblocks without video data having a variable word width being inserted in between.

2. Process according to Claim 1, characterized in that a global quantization information item (GQUANT) is inserted more than once, in particular for different areas of the picture, into the video data stream as picture information item of a picture.

3. Process according to Claim 1, characterized in that the order in which the video data of the macroblocks that are to be decoded identically are inserted into the video data stream is prescribed by a spiral which begins in the centre of the picture and, proceeding from that point, extends over all areas of the picture, the edge areas of the picture being encompassed last.

4. Process according to one of the preceding claims, characterized in that in order to facilitate error detection in the event of the transmission of video data having a fixed word width which are combined in the separate class (ADMIN + DC-INTRA), a parity bit is respectively added per data word (INTRADC, DQUANT).

5. Process according to one of the preceding claims, characterized in that, during the coding of video data, in particular the video data having a variable word width, such as the MCBPC codes and/or the MVD codes, a two-digit binary number, in particular (10), is used as the shortest code.

6. Process for evaluating a video data stream produced according to one of Claims 1 to 5, the picture information items of a picture being divided into classes of identical information items and the picture being divided into macroblocks, the video data of at least some of the classes being coded in a macroblock-by-macroblock manner, characterized in that a first number of coded macroblocks are decoded from the side of the bits of the video data of this class that were transmitted first, and in that a second number of coded macroblocks are decoded from the side of the bits of the video data of the class that were transmitted last, and in that those macroblocks which are decoded from the same side are decoded in an order such that in each case those macroblocks which are positioned in the centre of the picture are decoded first and the macroblocks which are positioned in the edge areas of the picture are decoded last.

## Revendications

1. Procédé pour générer un flux de données d'image à transmettre par un canal de données, notamment un canal radio mobile ,
- une image étant subdivisée en un nombre de macroblocs et les informations d'image étant réparties en classes d'informations de même type,
- les données d'image d'au moins une partie des classes sont codées par macroblocs et les données d'image codées sont insérées dans le flux de données d'image pour la classe respective,
- dans une station de réception, on décode un premier nombre de macroblocs codés en partant d'un côté du bit transmis en premier lieu parmi les données d'image de cette classe,
- et on décode un second nombre de macroblocs codés en partant du côté des bits transmis en dernier lieu des données d'image de la classe codée ici,
caractérisé en ce que
les macroblocs à décoder de même type sont insérés dans une telle succession dans le flux de données d'image,
- chaque fois, les macroblocs qui sont positionnés au centre de l'image sont tout d'abord décodés, et finalement les macroblocs qui sont situés au niveau des zones de bords de l'image sont décodés,
- la sélection est faite pour les macroblocs qui sont à décoder à partir d'un côté du bit des données d'image transmis en premier lieu, et les macroblocs qui sont à décoder à partir du côté du bit transmis en dernier lieu des données de bit sont choisis pour que les macroblocs voisins soient décodés chaque fois d'un côté différent et que les données d'image respectives qui présentent une largeur de mot fixe soient réunies en une classe distincte, tous les macroblocs étant placés les uns à la suite des autres sans insérer de données d'image intermédiaires à largeur de mot variable.

2. Procédé selon la revendication 1,
caractérisé en ce que
dans le flux de données d'image, on introduit une information d'image qui est une image d'une information de quantification globale GQUANT, plus d'une fois et notamment dans différentes zones de l'image.

3. Procédé selon la revendication 1,
caractérisé en ce que
la succession de l'introduction des données d'image des macroblocs à décoder de la même manière, est prédéterminée dans le flot de données d'image par une spirale qui commence au centre de l'image et partant de là, s'étend sur toutes les zones de l'image, les zones marginales de l'image étant saisies en dernier lieu.

4. Procédé selon l'une des revendications précédentes,
caractérisé en ce que
pour faciliter la reconnaissance d'erreur à la transmission des données d'image à largeur de mot fixe qui sont réunies en une classe propre (ADMIN + DC-INTRA), on ajoute chaque fois un bit de parité par mot de données (INTRADC, DQUANT).

5. Procédé selon l'une des revendications précédentes,
caractérisé en ce qu'
au codage des données d'image, notamment des données d'image à largeur de mot variable, telles qu'avec les codes MCBPC et/ou MVD, on utilise comme code le plus court un nombre binaire à deux positions, notamment (10).

6. Procédé pour l'exploitation d'un flux de données généré selon l'une des revendications 1 à 5, selon lequel on divise les informations d'une image en classes avec des informations de même type et on répartit l'image en macroblocs,
les données d'image d'au moins une partie des classes étant codées en macroblocs,
caractérisé en ce qu'
- on décode un premier nombre de macroblocs codés en partant du côté du bit de données d'image de cette classe, transmis en premier lieu, et on décode un second nombre de macroblocs codés en partant du côté du bit de données d'image de la classe, décodé en dernier lieu, et
- on décode les macroblocs du même côté selon un ordre tel que chaque fois les macroblocs qui sont positionnés dans un spectre de l'image soient décodés et que, finalement, on décode les macroblocs contenus dans les zones marginales de l'image.
